# FASCICULE DE BREVET EUROPEEN

(11) **EP 2 568 555 B1**
(45) Date de publication et mention de la délivrance du brevet: **16.03.2016**
(21) Numéro de dépôt: 12183696.9
(22) Date de dépôt: 10.09.2012
(51) Int. Cl.: H02G 5/06

(54) **Ligne de transport de courant comportant des moyens de guidage de l'extremite du conducteur interne**
Stromübertragungsleitung, die Mittel zum Lenken der Extremität des inneren Leiters umfasst
Current transmission line comprising a means for guiding the end of the inner conductor

(30) Priorité: 12.09.2011 FR 1158062
(43) Date de publication de la demande: 13.03.2013
(73) Titulaire: ALSTOM Technology Ltd, 5400 Baden (CH)
(72) Inventeur: Bernard, Mathieu, 73100 Aix les Bains (FR); Giusti, Alexandre, 73100 Aix les Bains (FR); Arnaud, Alain, 73100 Aix le Bains (FR)
(74) Mandataire: Ilgart, Jean-Christophe

(56) Documents cités:
- DE-A1- 2 339 554
- DE-A1- 3 835 990
- DE-U- 7 323 367
- US-A- 4 431 886
- US-A- 6 118 068

## Description

### DOMAINE TECHNIQUE

L'invention concerne une ligne de transport de courant électrique qui comporte un organe de support réalisé de manière à permettre un déplacement axial relatif de l'extrémité d'un conducteur interne de la ligne par rapport à l'extrémité associée d'une enveloppe externe de la ligne.

### ÉTAT DE LA TECHNIQUE ANTÉRIEURE

Une ligne de transport de courant , comme décrit dans DE 38 35 990 A1, est constituée d'une pluralité de tronçons qui sont raccordés bout à bout et dont chacun mesure par exemple une centaine de mètres de longueur. Chaque tronçon comporte principalement une enveloppe externe cylindrique et un conducteur interne cylindrique concentrique avec l'enveloppe.

Des supports isolants permettent de maintenir le conducteur à distance de l'enveloppe, évitant ainsi les court-circuits entre le conducteur et l'enveloppe, qui sont mis à des potentiels électriques différents.

Un organe de liaison est agencé à au moins l'une des extrémités d'un tronçon, pour le raccordement électrique dudit tronçon à un autre tronçon, et aussi pour supporter l'extrémité du conducteur.

La ligne de transport est agencée à l'extérieur, elle est donc soumise aux variations thermiques externes. De plus, lorsqu'il est traversé par un courant électrique, le conducteur est amené à s'échauffer.

Ainsi, le conducteur et l'enveloppe sont susceptibles de se dilater, de manière différente l'un par rapport à l'autre.

A titre d'exemple, pour un tronçon d'une ligne de transport qui mesure environ cent mètres de longueur, les différences de dilatations entre le conducteur et l'enveloppe peuvent se caractériser par un écart relatif de la longueur du conducteur par rapport à la longueur de l'enveloppe pouvant atteindre jusqu'à 350 mm.

Le conducteur est monté mobile dans l'enveloppe de manière à permettre les variations relatives de longueur entre le conducteur et l'enveloppe.

Ainsi, chaque tronçon de la ligne de transport comporte, à au moins une de ses extrémités, un organe de liaison qui réalise le guidage de l'extrémité associée du conducteur par rapport à l'extrémité de l'enveloppe lors de leurs variations dimensionnelles et qui réalise aussi le raccordement électrique du conducteur à un composant monté à l'extrémité du tronçon de la ligne.

Selon un mode de réalisation connu, l'organe de liaison comporte un axe cylindrique qui est reçu dans l'extrémité du conducteur et au moins un contact électrique, par exemple un ressort annulaire qui est comprimé radialement entre l'axe et l'extrémité du conducteur, de manière à permettre un raccordement électrique entre le conducteur et l'organe de liaison.

L'axe supporte le poids du conducteur, qui est d'environ 35 kg pour une longueur de 9 m et il permet un déplacement longitudinal de l'extrémité du conducteur par rapport à l'organe de liaison.

Selon ce mode de réalisation, la course de l'extrémité du conducteur est de 10 mm environ dans chaque sens.

Ainsi, ce mode de réalisation n'est pas adapté pour un tronçon de longueur plus importante, tel que défini ci-dessus, pour lequel la course de l'extrémité du conducteur est d'environ 350 mm.

Aussi, à cause du poids important du conducteur (compris entre 35kg et 60kg selon le type de conducteur et sa longueur) qui pèse sur le contact électrique, le frottement entre l'extrémité du conducteur et le contact peut produire une usure importante du contact et/ou de l'extrémité du conducteur, limitant ainsi la durée de vie globale de l'installation.

L'invention a pour but de proposer une ligne de transport dans laquelle le raccordement entre l'organe de liaison et l'extrémité du conducteur permet une course plus importante de l'extrémité du conducteur, tout en limitant le phénomène d'usure produite par ce déplacement.

### EXPOSÉ DE L'INVENTION

L'invention propose une ligne de transport de courant électrique comportant une enveloppe cylindrique externe d'axe principal longitudinal, un conducteur cylindrique d'axe principal A longitudinal sensiblement parallèle à l'axe principal de l'enveloppe, qui est agencé à l'intérieur de l'enveloppe, et un organe de liaison d'une extrémité longitudinale avant du conducteur à une extrémité longitudinale avant de l'enveloppe externe qui est réalisé de manière à guider l'extrémité avant du conducteur en déplacement dans l'extrémité avant de l'enveloppe au moins selon la direction longitudinale, l'organe de liaison comportant un corps qui est fixé à l'extrémité avant de l'enveloppe et comportant un bras de guidage de l'extrémité avant du conducteur qui s'étend longitudinalement vers l'arrière depuis le corps et dont l'extrémité arrière libre est reçue à l'intérieur de l'extrémité avant du conducteur pour coopérer avec une surface cylindrique interne de l'extrémité avant du conducteur, caractérisée en ce que l'extrémité arrière du bras porte au moins un élément de guidage linéaire qui est monté libre en rotation par rapport à l'extrémité arrière du bras autour d'au moins un axe transversal et en ce que l'extrémité avant du conducteur repose verticalement vers le bas sur ledit organe de guidage au niveau de sa surface cylindrique interne.

Le contact roulant entre l'élément de support et l'extrémité du conducteur permet de supporter la masse du conducteur et de réduire de manière importante les frottements entre l'organe de liaison et le conducteur, limitant ainsi l'usure de ces composants.

Aussi, un tel contact roulant permet d'avoir une course importante de l'extrémité du conducteur par rapport à l'organe de liaison, sans que ces composants ne s'usent de manière trop importante.

De préférence, l'élément de guidage consiste en une roue montée libre en rotation par rapport à l'organe de liaison autour d'un axe transversal qui supporte l'extrémité avant du conducteur.

De préférence, le diamètre de la roue est inférieur au diamètre interne de l'extrémité avant du conducteur et l'axe transversal de rotation de la roue est situé verticalement au-dessus de l'axe longitudinal de l'extrémité avant du conducteur.

De préférence, l'organe de liaison est raccordé électriquement avec le conducteur.

De préférence, l'organe de liaison comporte des lames métalliques dont une extrémité de chaque lame est en contact glissant sur la face cylindrique externe du conducteur.

De préférence, l'extrémité libre de chaque lame est en appui élastique sur la face cylindrique externe du conducteur.

De préférence, les lames sont portées par un manchon cylindrique qui s'étend longitudinalement vers l'arrière depuis le corps de l'organe de liaison et dont le diamètre intérieur du manchon est supérieur au diamètre de l'extrémité avant du conducteur.

De préférence, l'organe de liaison comporte une pluralité de lames réparties sur le pourtour de l'extrémité longitudinale arrière libre du manchon et chaque lame s'étend longitudinalement vers l'arrière et radialement vers l'intérieur du manchon, depuis l'extrémité arrière du manchon.

De préférence, l'organe de liaison comporte un couvercle annulaire qui est monté sur l'extrémité arrière du manchon et qui recouvre longitudinalement et radialement les lames.

De préférence, le corps de l'organe de liaison est fixé à l'enveloppe par l'intermédiaire d'un support isolant électriquement comportant un élément central métallique auquel le corps de l'organe de liaison est fixé.

### BRÈVE DESCRIPTION DES DESSINS

D'autres caractéristiques et avantages de l'invention apparaîtront à la lecture de la description détaillée qui va suivre pour la compréhension de laquelle on se reportera aux dessins annexés dans lesquels :
- la figure 1 est une représentation schématique en section axiale suivant un plan axial vertical de l'extrémité d'un tronçon de ligne de transport de courant comportant un organe de liaison et d'un conducteur selon l'invention ;
- la figure 2 est une section horizontale de l'organe de liaison et du conducteur tels que représentés à la figure 1 ;
- la figure 3 est une représentation schématique en perspective de l'organe de liaison selon l'invention.

### EXPOSÉ DÉTAILLÉ DE MODES DE RÉALISATION PARTICULIERS

Dans la description qui va suivre, des éléments identiques, analogues ou similaires seront désignés par les mêmes références.

A titre non limitatif et en vue de faciliter la compréhension de la description et des revendications, on adoptera les orientations Longitudinale, Transversale et Verticale en référence au repère L, T, V indiqué aux figures.

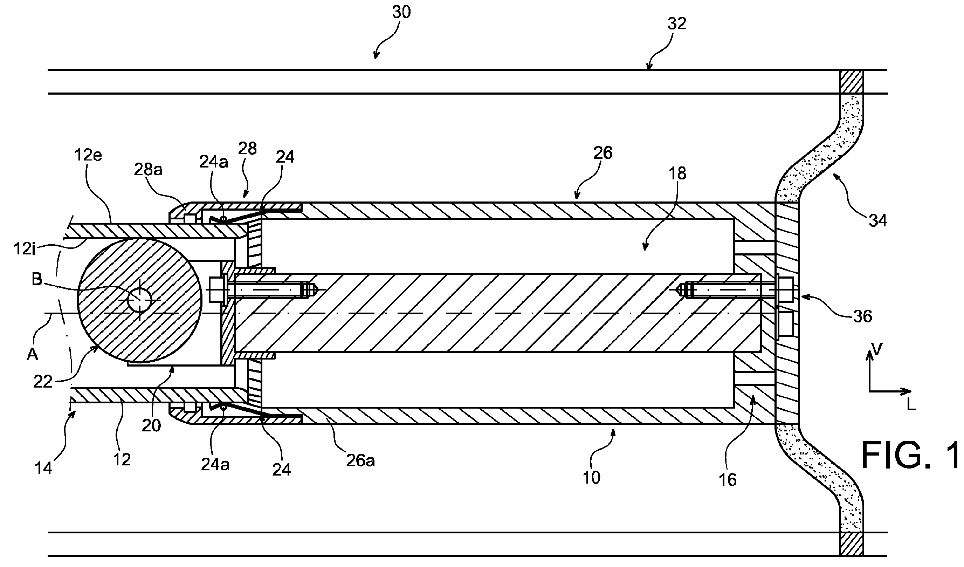

On a représenté à la figure 1 une extrémité avant d'un tronçon 30 d'une ligne de transport de courant électrique à moyenne, haute ou très haute tension.

Le tronçon 30 de la ligne de transport comporte principalement une enveloppe cylindrique 32 externe d'axe principal longitudinal et un conducteur de courant 14 d'axe principal A longitudinal sensiblement parallèle à l'axe principal de l'enveloppe externe 32.

L'enveloppe externe 32 et le conducteur 14 sont réalisés en matériau conducteur électrique, par exemple en aluminium, et sont portés à des potentiels électriques différents.

L'enveloppe externe 32 délimite un volume cylindrique qui est fermé et qui est rempli d'un gaz isolant sous pression limitant les risques de court-circuit avec le conducteur 14.

Un organe de liaison 10 relie une extrémité de l'enveloppe externe 32 du tronçon 30, ici l'extrémité avant de l'enveloppe externe 32, avec une extrémité avant 12 du conducteur de courant 14.

Le tronçon 30 de la ligne de transport est installé en extérieur, il est donc soumis aux conditions climatiques externes. Par conséquent, en fonction des conditions climatiques, le conducteur 14 et l'enveloppe 32 se dilatent, chacun selon des amplitudes différentes. Aussi, lorsqu'il est traversé par un courant électrique, le conducteur 14 se dilate.

Ainsi, la longueur axiale du conducteur 14 varie par rapport à la longueur axiale de l'enveloppe 32, ce qui amène l'extrémité avant 12 du conducteur 14 à se déplacer longitudinalement par rapport à l'extrémité avant de l'enveloppe 32.

L'organe de liaison 10 a pour fonction de guider l'extrémité avant 12 du conducteur 14 en déplacement longitudinal par rapport à l'extrémité avant de l'enveloppe 32, tout en supportant le poids du conducteur 14.

Aussi, l'organe de liaison 10 est raccordé électriquement au conducteur 14 pour permettre le raccordement électrique de l'extrémité avant du tronçon 30.

L'organe de liaison 10 est fixé à l'extrémité avant de l'enveloppe 32 par l'intermédiaire d'un support isolant 34 se présentant globalement sous la forme d'un élément coaxial à l'enveloppe 32, qui est étanche au gaz contenu dans l'enveloppe 32 et par un élément central métallique 36 auquel l'organe de liaison 10 est fixé.

L'organe de liaison 10 comporte un corps 16 qui s'étend dans un plan transversal à l'axe principal A longitudinal du conducteur 14. Le corps 16 est fixé à l'élément central 36 du support isolant 34 de manière telle que l'organe de liaison 10 est raccordé électriquement à l'élément central 36.

L'organe de liaison 10 comporte un bras 18 de guidage de l'extrémité avant 12 du conducteur 14, qui consiste globalement en une barre longitudinale, qui s'étend longitudinalement vers l'arrière depuis le corps 16 et qui est globalement coaxial à l'axe principal A du conducteur 14.

L'extrémité arrière libre 20 du bras 18 est reçue à l'intérieur de l'extrémité avant 12 du conducteur 14 et elle coopère avec la surface interne 12i de l'extrémité avant 12 du conducteur 14 pour réaliser le guidage en déplacement longitudinal et le support verticalement du conducteur 14.

Les dimensions radiales du bras 18 par rapport à l'axe longitudinal A sont inférieures au diamètre interne de l'extrémité avant 12 du conducteur 14.

L'organe de liaison 10 comporte aussi une roue 22 qui est montée libre en rotation par rapport à l'extrémité arrière 20 du bras 18 autour d'un axe transversal B.

La roue 22 est en appui vers le haut contre la surface interne 12i de l'extrémité avant 12 du conducteur 14.

Le diamètre externe de la roue 22 est inférieur au diamètre interne de l'extrémité avant 12 du conducteur 14 et l'axe B de rotation de la roue 22 est situé verticalement au-dessus de l'axe principal A du conducteur 14.

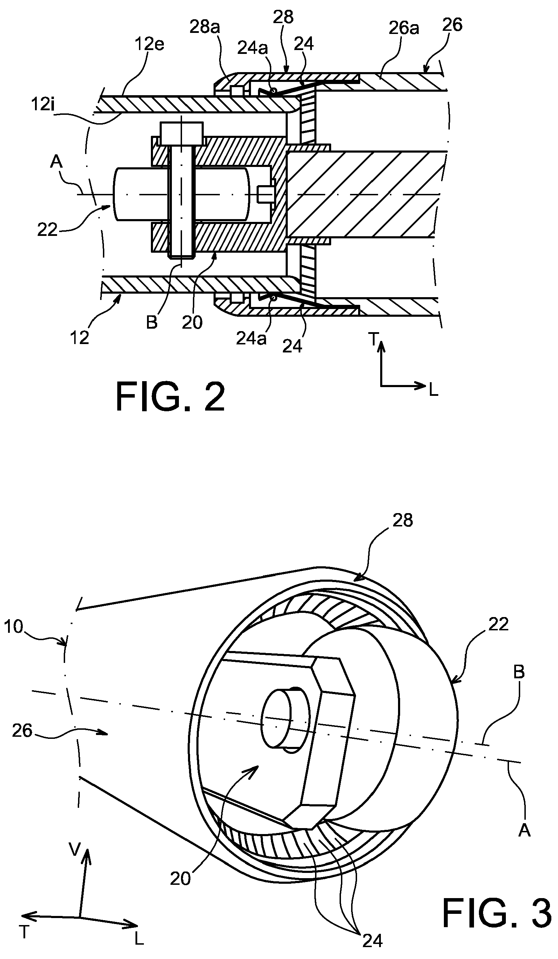

Aussi, comme on peut le voir aux figures 2 et 3, la surface annulaire externe de la roue 22 est bombée vers l'extérieur.

Ainsi, l'extrémité avant 12 du conducteur 14 repose verticalement vers le bas sur la roue 22, le contact de la roue 22 avec la surface interne 12i de l'extrémité avant 12 du conducteur 14 est située dans la partie supérieure de l'extrémité avant 12 du conducteur 14.

Comme on peut le voir à la figure 2, la roue 22 est centrée transversalement par rapport à l'axe principal du conducteur 14 et de l'organe de liaison 10. Ainsi, les efforts produits par l'extrémité avant 12 du conducteur 14 sont orientés dans le plan principal médian de la roue 22.

Lors du déplacement longitudinal de l'extrémité avant 12 du conducteur 14 par rapport à l'organe de liaison 10, l'extrémité avant 12 du conducteur 14 roule sur la roue 22.

Il n'y a donc aucun frottement entre le conducteur 14 et l'organe de liaison 10.

Aussi, l'orientation de l'axe B de rotation de la roue 22 permet de guider l'extrémité avant 12 du conducteur 14 le long de la direction longitudinale L.

L'organe de liaison 10 est conçu pour permettre une grande amplitude de déplacement de l'extrémité avant 12 du conducteur 14 selon la direction longitudinale.

De préférence, l'organe de liaison 10 est réalisé de manière à permettre un déplacement longitudinal d'environ 350 mm de l'extrémité avant 12 du conducteur 14 par rapport à l'extrémité avant de l'enveloppe, c'est à dire que la course de l'extrémité avant 12 du conducteur 14 par rapport à l'organe de liaison 10 est d'environ 350 mm.

A cet effet, la longueur du bras 18 est définie de manière que la distance entre l'axe B de rotation de la roue 22 et le corps 16 de l'organe de liaison 10 est supérieure à la course de 350 mm de l'extrémité avant 12 du conducteur 14 par rapport à l'organe de liaison 10.

Comme dit précédemment, l'organe de liaison 10 est raccordé électriquement au connecteur 14, pour permettre le raccordement électrique du tronçon 30 avec un composant électrique agencé en avant du tronçon 30, par exemple avec un autre tronçon similaire de la ligne de transport.

Pour cela, l'organe de liaison 10 est réalisé en un matériau conducteur électrique, par exemple en aluminium, et il comporte une pluralité de lames conductrices 24 qui sont en contact avec la surface cylindrique externe 12e de l'extrémité avant 12 du conducteur 14.

Les lames 24 sont portées par un manchon 26 cylindrique qui est globalement coaxial au bras 18 et qui s'étend longitudinalement vers l'arrière depuis le corps 16.

Les lames 24 sont agencées au niveau de l'extrémité arrière libre du manchon 26, et elles sont réparties sur le pourtour de l'extrémité arrière 26a du manchon 26.

Le nombre de lames 24 est relativement important, pour réduire la résistance électrique de la liaison entre le conducteur 14 et l'organe de liaison.

Comme on peut le voir aux figures, chaque lame 24 s'étend globalement longitudinalement vers l'arrière depuis l'extrémité arrière 26a du manchon 26 et elle est recourbée radialement vers l'intérieur selon l'axe principal longitudinal du manchon 26.

L'extrémité arrière 24a de chaque lame 24 est donc plus proche radialement de l'axe principal A du manchon 26 que l'extrémité avant de la lame 24.

Les lames 24 sont réalisées de manière qu'en position de repos, c'est-à-dire en l'absence du conducteur 14, l'extrémité arrière 24a de chaque lame 24 est située à une cote radiale inférieure au rayon de la surface externe 12e du conducteur 14. Ainsi, en présence du conducteur 14, chaque lame 24 est déformée élastiquement et exerce un effort élastique de pression de son extrémité arrière 24a sur la surface externe 12e du conducteur 14.

A titre de variante de réalisation, cet effort élastique est renforcé au besoin par un ressort annulaire (non représenté) qui est disposé sur le pourtour des lames 24.

Le diamètre interne du manchon 26 est supérieur au diamètre externe du conducteur 14. Le jeu radial entre le manchon 26 et le conducteur 14 permet à l'extrémité avant 12 du conducteur 14 de se déplacer à l'intérieur du manchon 26, et permet aussi une dilatation radiale de l'extrémité avant 12 du conducteur 14.

Le bras 18, et la roue 22 supportent le poids du conducteur 14. Le bras 18 se déforme élastiquement en fléchissant vers le bas.

Le jeu radial entre le manchon 26 et le conducteur 14 est défini pour permettre un déplacement vertical vers le bas de l'extrémité avant 12 du conducteur 14 du fait de cette déformation élastique du bras 18, et plus généralement pour permettre un défaut de coaxialité entre le manchon 26 et le conducteur 14.

Ainsi, ni le guidage en translation axiale de l'extrémité avant 12 du conducteur 14, ni le raccordement électrique de l'organe de liaison 10 avec le conducteur 16 ne sont dégradés.

Puisque les lames 24 sont réalisées en matériau déformable élastiquement, elles restent en contact sur la face externe 12e de l'extrémité avant 12 du conducteur, quelle que soit la position de l'axe principal A du conducteur 14 par rapport à l'organe de liaison 10, et aussi quelle que soit le niveau de dilatation radiale du conducteur 14.

L'organe de liaison 10 comporte un couvercle annulaire 28 qui est monté sur l'extrémité arrière 26a du manchon 26 de manière à prolonger le manchon 26 vers l'arrière, et qui recouvre radialement les lames 24. Le couvercle annulaire 28 permet de fixer les lames 24 au manchon 26 par sertissage afin d'obtenir un ensemble diélectriquement acceptable

L'extrémité arrière libre 28a du couvercle 28 est située axialement en arrière des extrémités arrière 24a des lames 24 et est resserrée radialement pour se rapprocher de la surface externe 12e de l'extrémité avant 12 du conducteur 14. Le couvercle 28, forme ainsi un réceptacle annulaire situé dessous les extrémités arrière des lames 24.

Les particules pouvant éventuellement se former par frottement des lames 24 sur le conducteur tombent ainsi dans ce réceptacle formé par le couvercle 28, sous l'action de la gravité terrestre.

Selon une variante de réalisation, l'extrémité arrière libre 28a du couvercle 28 porte en outre un joint annulaire du type racleur (non représenté), qui est comprimé entre l'extrémité arrière 28a du couvercle 28 et la surface cylindrique externe 12e de l'extrémité avant 12 du conducteur 14 pour éviter que les particules ne sortent vers l'extérieur du couvercle 28.

Il sera compris que l'invention n'est pas limitée à ce seul mode de réalisation selon lequel l'organe de liaison 10 comporte une roue 22 pour supporter et guider l'extrémité avant 12 du conducteur 14 et que l'invention concerne tout composant apte à rouler sur la surface interne du conducteur.

Ainsi, selon une variante de réalisation non représentée, l'organe de liaison 10 comporte une bille qui est portée par l'extrémité libre 20 du bras, et qui est libre en rotation par rapport à l'extrémité libre du bras 18.

Selon une autre variante non représentée, l'organe de liaison 10 comporte plusieurs roues 22 alignées longitudinalement, ce qui permet de limiter les efforts subis par chaque roue 22 et augmenter leur durée de vie.

De plus il sera compris que l'invention n'est pas limitée à ce seul mode de réalisation selon lequel la liaison électrique entre l'organe de liaison 10 et le conducteur 12 comporte une pluralité de lames conductrices 24 qui sont en contact avec la surface cylindrique externe 12e de l'extrémité avant 12 du conducteur 14, et que l'invention concerne tout organe de liaison comportant des moyens aptes à réaliser une liaison électrique tels que par exemple des contacts ressorts ou des doigts de contact assemblés par ressort.

Selon encore une autre variante de réalisation de l'invention, l'extrémité arrière 20 et le bras 18 sont réalisés d'une seule pièce.

## Revendications

1. Ligne de transport de courant électrique comportant une enveloppe (32) cylindrique externe d'axe principal longitudinal, un conducteur (14) cylindrique d'axe principal(A) longitudinal sensiblement parallèle à l'axe principal de l'enveloppe (32), qui est agencé à l'intérieur de l'enveloppe (32),
et un organe de liaison (10) d'une extrémité longitudinale avant (12) du conducteur (14) à une extrémité longitudinale avant de l'enveloppe (32) externe qui est réalisé de manière à guider l'extrémité avant (12) du conducteur (14) en déplacement dans l'extrémité avant de l'enveloppe (32) au moins selon la direction longitudinale,
l'organe de liaison (10) comportant un corps (16) qui est fixé à l'extrémité avant de l'enveloppe (32) et comportant un bras (18) de guidage de l'extrémité avant (12) du conducteur (14) qui s'étend longitudinalement vers l'arrière depuis le corps (16) et dont l'extrémité arrière libre (20) est reçue à l'intérieur de l'extrémité avant (12) du conducteur (14) pour coopérer avec une surface cylindrique interne (12i) de l'extrémité avant (12) du conducteur (14),
**caractérisée en ce que** l'extrémité arrière (20) du bras (18) porte au moins un élément de guidage linéaire (22) qui est monté libre en rotation par rapport à l'extrémité arrière (20) du bras (18) autour d'au moins un axe transversal (B) et **en ce que** l'extrémité avant (12) du conducteur (14) repose verticalement vers le bas sur ledit organe de guidage (22) au niveau de sa surface cylindrique interne (12i).

2. Ligne de transport de courant électrique selon la revendication précédente, **caractérisée en ce que** l'élément de guidage (22) consiste en une roue montée libre en rotation par rapport à l'organe de liaison (10) autour d'un axe transversal (B) qui supporte l'extrémité avant (12) du conducteur (14).

3. Ligne de transport de courant électrique selon la revendication précédente, **caractérisée en ce que** le diamètre de la roue (22) est inférieur au diamètre interne de l'extrémité avant (12) du conducteur (14) et **en ce que** l'axe transversal (B) de rotation de la roue (22) est situé verticalement au-dessus de l'axe longitudinal (A) de l'extrémité avant (12) du conducteur (14).

4. Ligne de transport de courant électrique selon l'une quelconque des revendications précédentes, **caractérisée en ce que** l'organe de liaison (10) est raccordé électriquement avec le conducteur (14).

5. Ligne de transport de courant électrique selon la revendication précédente, **caractérisée en ce que** l'organe de liaison (10) comporte des lames (24) métalliques dont une extrémité (24a) de chaque lame (24) est en contact glissant sur la face cylindrique externe (12e) du conducteur (14).

6. Ligne de transport de courant électrique selon l'une quelconque des revendications précédentes, **caractérisée en ce que** l'extrémité libre (24a) de chaque lame (24) est en appui élastique sur la face cylindrique externe (12e) du conducteur (14).

7. Ligne de transport de courant électrique selon l'une quelconque des revendications 5 ou 6, **caractérisée en ce que** les lames (24) sont portées par un manchon cylindrique (26) qui s'étend longitudinalement vers l'arrière depuis le corps (16) de l'organe de liaison (10) et dont le diamètre intérieur du manchon (26) est supérieur au diamètre de l'extrémité avant (12) du conducteur (14).

8. Ligne de transport de courant électrique selon l'une quelconque des revendications 5 à 7, **caractérisée en ce que** l'organe de liaison (10) comporte une pluralité de lames (24) réparties sur le pourtour de l'extrémité longitudinale arrière (26a) libre du manchon (26) et **en ce que** chaque lame (24) s'étend longitudinalement vers l'arrière et radialement vers l'intérieur du manchon (26), depuis l'extrémité arrière (26a) du manchon (26).

9. Ligne de transport de courant électrique selon la revendication précédente, **caractérisée en ce que** les lames (24) sont fixées à l'organe de liaison (10) par sertissage par l'intermédiaire d'un couvercle annulaire (28) qui est monté sur l'extrémité arrière (26a) du manchon (26) et qui recouvre longitudinalement et radialement les lames (24).

10. Ligne de transport de courant électrique selon l'une quelconque des revendications précédentes, **caractérisée en ce que** le corps (16) de l'organe de liaison (10) est fixé à l'enveloppe (32) par l'intermédiaire d'un support (34) isolant électriquement comportant un élément central métallique(36)auquel le corps (16) de l'organe de liaison (10) est fixé.

## Patentansprüche

1. Stromübertragungsleitung, enthaltend einen zylindrischen Außenmantel (32), dessen Hauptachse in Längsrichtung verläuft, einen zylindrischen Leiter (14), dessen Hauptachse (A) in Längsrichtung im Wesentlichen parallel zur Hauptachse des Mantels (32) verläuft und der innerhalb des Mantels (32) angeordnet ist,
und ein Verbindungsglied (10) zum Verbinden eines vorderen Längsendes (12) des Leiters (14) mit einem vorderen Längsende des Außenmantels (32), das so ausgebildet ist, dass es das vordere Ende (12) des Leiters (14) in dem vorderen Ende des Mantels (32) zumindest in Längsrichtung verschiebbar führt,
wobei das Verbindungsglied (10) einen Körper (16) aufweist, der am vorderen Ende des Mantels (32) befestigt ist und einen Führungsarm (18) zum Führen des vorderen Endes (12) des Leiters (14) aufweist, der sich von dem Körper (16) in Längsrichtung nach hinten erstreckt und dessen freies hinteres Ende (20) innerhalb des vorderen Endes (12) des Leiters (14) aufgenommen ist, um mit einer zylindrischen Innenfläche (12i) des vorderen Endes (12) des Leiters (14) zusammenzuwirken,
**dadurch gekennzeichnet, dass** das hintere Ende (20) des Arms (18) zumindest ein lineares Führungselement (22) trägt, das gegenüber dem hinteren Ende (20) des Arms (18) um zumindest eine Querachse (B) frei drehbar gelagert ist, und dass das vordere Ende (12) des Leiters (14) vertikal nach unten auf dem Führungsglied (22) im Bereich seiner zylindrischen Innenfläche (12i) aufliegt.

2. Stromübertragungsleitung nach dem vorangehenden Anspruch, **dadurch gekennzeichnet, dass** das Führungselement (22) aus einem gegenüber dem Verbindungsglied (10) um eine Querchase (B) herum frei drehbar gelagerten Rad besteht, welches das vordere Ende (12) des Leiters (14) trägt.

3. Stromübertragungsleitung nach dem vorangehenden Anspruch, **dadurch gekennzeichnet, dass** der Durchmesser des Rades (22) kleiner als der Innendurchmesser des vorderen Endes (12) des Leiters (14) ist und dass die quer verlaufende Drehachse (B) des Rades (22) vertikal oberhalb der Längsachse (A) des vorderen Endes (12) des Leiters (14) liegt.

4. Stromübertragungsleitung nach einem der vorangehenden Ansprüche, **dadurch gekennzeichnet, dass** das Verbindungsglied (10) elektrisch an den Leiter (14) angeschlossen ist.

5. Stromübertragungsleitung nach dem vorangehenden Anspruch, **dadurch gekennzeichnet, dass** das Verbindungsglied (10) Metallstege (24) aufweist, von denen ein Ende (24a) eines jeden Stegs (24) in gleitender Anlage an der zylindrischen Außenfläche (12e) des Leiters (14) ist.

6. Stromübertragungsleitung nach einem der vorangehenden Ansprüche, **dadurch gekennzeichnet, dass** das freie Ende (24a) eines jeden Stegs (24) in elastischer Anlage an der zylindrischen Außenfläche (12e) des Leiters (14) ist.

7. Stromübertragungsleitung nach einem der Ansprüche 5 oder 6, **dadurch gekennzeichnet, dass** die Stege (24) von einer zylindrischen Muffe (26) getragen werden, die sich von dem Körper (16) des Verbindungsglieds (10) in Längsrichtung nach hinten erstreckt und deren Innendurchmesser der Muffe (26) größer ist als der Durchmesser des vorderen Endes (12) des Leiters (14).

8. Stromübertragungsleitung nach einem der Ansprüche 5 bis 7, **dadurch gekennzeichnet, dass** das Verbindungsglied (10) eine Mehrzahl von Stegen (24) aufweist, die über den Umfang des freien, hinteren Längsendes (26a) der Muffe (26) verteilt sind, und dass jeder Steg (24) ausgehend von dem hinteren Ende (26a) der Muffe (26) sich in Längsrichtung nach hinten und radial ins Innere der Muffe (26) erstreckt.

9. Stromübertragungsleitung nach dem vorangehenden Anspruch, **dadurch gekennzeichnet, dass** die Stege (24) an das Verbindungsglied (10) durch Crimpen über eine ringförmige Abdeckung (28) befestigt sind, die am hinteren Ende (26a) der Muffe (26) angebracht ist und die Stege (24) in Längsrichtung und radial überdeckt.

10. Stromübertragungsleitung nach einem der vorangehenden Ansprüche, **dadurch gekennzeichnet, dass** der Körper (16) des Verbindungsglieds (10) an den Mantel (32) über einen elektrisch isolierenden Träger (34) befestigt ist, der ein metallisches Mittelstück (36) aufweist, an das der Körper (16) des Verbindungsglieds (10) befestigt ist.

## Claims

1. An electricity transmission line including a cylindrical outer casing (32) of longitudinal main axis, a cylindrical conductor (14) of longitudinal main axis (A) that is substantially parallel to the main axis of the casing (32), which is arranged inside the casing (32); and
a connection member (10) for connecting a front longitudinal end (12) of the conductor (14) to a front longitudinal end of the outer casing (32), which is done in such a manner as to guide the front end (12) of the conductor (14) in movement in the front end of the casing (32) at least in the longitudinal direction;
the connection member (10) including a body (16) that is fastened to the front end of the casing (32) and including a guide arm (18) for guiding the front end (12) of the conductor (14) that extends longitudinally rearwards from the body (16), and the free rear end (20) is received inside the front end (12) of the conductor (14) in order to co-operate with an inside cylindrical surface (12i) of the front end (12) of the conductor (14);
the line being **characterized in that** the rear end (20) of the arm (18) carries at least a linear guide element (22) that is mounted free to rotate relative to the rear end (20) of the arm (18) about at least one transverse axis (B), and **in that** the front end (12) of the conductor (14) rests vertically downwards on said guide member (22) level at its inside cylindrical surface (12i).

2. An electricity transmission line according to the preceding claim, **characterized in that** the guide element (22) consists in a wheel that is mounted free to rotate relative to the connection member (10) about a transverse axis (B) that supports the front end (12) of the conductor (14).

3. An electricity transmission line according to the preceding claim, **characterized in that** the diameter of the wheel (22) is less than the inside diameter of the front end (12) of the conductor (14) and **in that** the transverse axis (B) of rotation of the wheel (22) is situated vertically above the longitudinal axis (A) of the front end (12) of the conductor (14).

4. An electricity transmission line according to any preceding claim, **characterized in that** the connection member (10) is connected electrically to the conductor (14).

5. An electricity transmission line according to the preceding claim, **characterized in that** the connection member (10) includes metal blades (24) with an end (24a) of each blade (24) being in sliding contact with the outside cylindrical face (12e) of the conductor (14).

6. An electricity transmission line according to any preceding claim, **characterized in that** the free end (24a) of each blade (24) presses resiliently on the outside cylindrical face (12e) of the conductor (14).

7. An electricity transmission line according to claim 5 or claim 6, **characterized in that** the blades (24) are carried by a cylindrical sleeve (26) that extends longitudinally rearwards from the body (16) of the connection member (10) and the inside diameter of the sleeve (26) is greater than the diameter of the front end (12) of the conductor (14).

8. An electricity transmission line according to any one of claims 5 to 7, **characterized in that** the connection member (10) includes a plurality of blades (24) distributed over the periphery of the free rear longitudinal end (26a) of the sleeve (26) and **in that** each blade (24) extends longitudinally rearwards and radially towards the inside of the sleeve (26), from the rear end (26a) of the sleeve (26).

9. An electricity transmission line according to the preceding claim, **characterized in that** the blades (24) are fastened to the connection member (10) by crimping by means of an annular cover (28), which is mounted on the rear end (26a) of the sleeve (26) and covers the blades longitudinally and radially.

10. An electricity transmission line according to any preceding claim, **characterized in that** the body (16) of the connection member (10) is fastened to the casing (32) by means of an electrically-insulating support (34) comprising a central metal element (36) to which the body (16) of the connection member (10) is fastened.
